# EUROPÄISCHE PATENTSCHRIFT

(11) **EP 1 285 822 B1**
(45) Veröffentlichungstag und Bekanntmachung des Hinweises auf die Patenterteilung: **30.11.2005**
(21) Anmeldenummer: 02014382.2
(22) Anmeldetag: 28.06.2002
(51) Int. Cl.: B60R 21/20

(54) **Airbageinrichtung für ein Kraftfahrzeug**
Airbag device for a motor vehicle
Dispositif d'airbag pour véhicule automobile

(30) Priorität: 11.08.2001 DE 10139593
(43) Veröffentlichungstag der Anmeldung: 26.02.2003
(73) Patentinhaber: Dr.Ing. h.c.F. Porsche Aktiengesellschaft, 70435 Stuttgart (DE)
(72) Erfinder: Dietrich, Günter, 71691 Freiberg (DE)

(56) Entgegenhaltungen:
- EP-A- 0 728 628
- EP-A- 0 823 353
- EP-A- 1 000 816
- DE-A- 4 308 693
- US-A- 5 342 082
- US-A- 5 405 163

## Beschreibung

Die Erfindung bezieht sich auf eine Airbageinrichtung für ein Kraftfahrzeug nach dem Oberbegriff des Patentanspruchs 1.

Aus der EP 0 728 628 A2 ist eine Airbageinrichtung bekannt, die ein Generatorgehäuse mit Wänden für einen Schußkanal eines Luftsackes aufweist. Eine vordere Wand des Schußkanals ist aus zwei lösbar miteinander verbundenen Einzelwänden gebildet, die gegeneinander bei einem Kopfaufprall bzw. bei einer Laststellung voneinander trennbar sind. Aus der DE 43 08 693 A1 ist eine Luftsackeinrichtung für einen Fahrzeuginsassen bekannt, die einen Behälter umfasst, der mit einem U-förmigen Rahmen mittels Lagerungen schwenkbar verbunden ist. Dieser U-förmige Rahmen ist mit einem Halteteil verbunden, welches über eine Nietverbindung mit dem Behälter lösbar verbunden ist. Bei einem Kopfaufprall, das heißt bei einer Laststellung kann sich der Rahmen durch Abscheren der Nietverbindung absenken, so dass die Verletzung eines Fahrzeuginsassen vermieden wird.

Aufgabe der Erfindung ist es, eine verbesserte Airbageinrichtung für ein Kraftfahrzeug zu schaffen, die eine einfache Montierbarkeit ins Fahrzeug sowie eine unbehinderte und geführte Wandabsenkung einer Kanalwand des Schußkanals bei einem Kopfaufprall bzw. in einer Laststellung gewährleistet.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß durch die Verwendung eines schwenkbeweglich am Generatorgehäuse gehaltenen Kopfaufschlagelements, dieses bei einer Laststellung ohne Behinderung sofort absenkbar bzw. verschwenkbar ist und somit Verletzungen am Kopf eines Fahrzeuginsassen weitestgehend vermieden werden. Hierzu ist in einer ersten dem Fahrzeuginsassen zugerichteten Kanalwand des Generatorgehäuses ein Kopfaufschlagelement in Lagern einseitig schwenkbeweglich angeordnet und in der zweiten darunter gelegenen Kanalwand des Gehäuses das Kopfaufschlagelement in einer Ausgangsstellung über eine klemmende Verbindung einhängbar und in einer Laststellung aufknüpfbar.

Das Kopfaufschlagelement besteht im wesentlichen hierzu aus einem U-förmigen Bügel mit an der ersten Kanalwand des Gehäuses gelagerten Schenkel, die über ein Stegteil miteinander verbunden sind, das eine ergänzende obere Kanalwand bildet, die als Verbindung eine Aufnahmerinne für eine angeformte Hakenleiste an der zweiten Kanalwand des Gehäuses aufweist. Der schwenkbar angelenkte Bügel kann bei einem Kopfaufschlag unmittelbar reagieren und es werden Verzögerungen beispielsweise durch eine Deformation hervorgerufen, nach der Einrichtung gem. der EP 0 728 628 A2 vermieden.

Die Verbindung zwischen dem Kopfaufschlagelement und der Wand des Generatorgehäuses kann als formschlüssige Verbindung ausgelegt sein, wobei beispielsweise die Aufnahmerinne eine entsprechend geformte korrespondierende Hakenleiste aufweist.

Des Weiteren ist erfindungsgemäß auch eine ausgeprägte Haltesicke denkbar, die in Laststellung formschlüssig in einer eingeprägten Aufnahmesicke klemmend gehalten wird. Die Aufnahmesicke in der Wand des Generatorgehäuses ist im Querschnitt etwa W-förmig mit zwei Rastsicken ausgebildet und ein oberer Rand der Wand des Generatorgehäuses ist nach außen abgewinkelt, wobei korrespondierend zur Aufnahmesicke die Haltesicke der Kanalwand in der Aufnahmesicke klemmend anliegend gehalten wird.

Nach der Erfindung ist vorgesehen, dass bei einem Kopfaufprall die obere Kanalwand des Kopfaufschlagelements um eine von den Lagern gebildete etwa horizontale Schwenkachse gegenüber der ortsfesten zweiten Kanalwand des Generatorgehäuses im Lastfall nach unten unter Ausknüpfung der formschlüssigen Verbindung abschwenkbar ist. Hierdurch wird insbesondere erreicht, dass der Kopf eines Fahrzeuginsassen, insbesondere eines Beifahrers nicht auf eine feststehende Kante einer Schusskanalwand aufschlägt, sondern diese harte Kante sich im Lastfall in die Einrichtung hineinbewegt bzw. verschwenkt und somit eine Verminderung des Aufschlags erfolgt. Des Weiteren wird durch das Ausknüpfen der Verbindung zwischen dem Kopfaufschlagelement und der Wand des Generatorgehäuses zusätzlich Energie abgebaut.

Das Generatorgehäuse ist an stirnseitigen Konsolen über Befestigungsmittel gehalten und diese sind über abgestellte Winkel mit einem Träger des Fahrzeugaufbaus steif verbunden. Die Anbindung am Träger soll relativ unnachgiebig ausgeführt sein, damit sämtliche Belastungen, wie Schwingungen beim Schuss aufgenommen werden und eine Deformierbarkeit beim Kopfaufschlag nicht stattfinden kann.

Mit dem Generatorgehäuse sind Befestigungswinkel verbunden, über welche die Airbageinrichtung an einer Schalttafel des Fahrzeugs deformierbar befestigt wird. Durch diese zusätzliche Verformung der Befestigungswinkel wird zusätzliche Energie abgebaut. Diese plastische Verformung wird außerdem dazu gebraucht, um an der Schalttafel eine Deformation zu ermöglichen.

Es wird aufgrund der Anordnung des Stegs des Kopfaufprallelements in einer Ebene mit der Wand des Generatorgehäuses ein nahezu glattwandiger ebener Schusskanal gebildet, wobei an der zweiten Kanalwand des Generatorgehäuses bei Laststellung die obere Kanalwand des Kopfaufschlagelements abgestützt ist.

Die stirnseitigen Wände des Schusskanals werden einerseits durch die Schenkel des Kopfaufschlagelements und andererseits durch die Konsolen gebildet, wodurch sich jeweils eine ergänzende gemeinsame durchgehende und an den Ecken hochgezogene stirnseitige Kanalwand ergibt.

Durch die erfindungsgemäße Ausführung wird eine gute Führung des Luftsackes und ein schneller Ausschuss des Luftsackes im Lastfall erzielt. Des Weiteren wird zur Erfüllung des Kopfaufschlags im Bereich der Schalttafel ein leicht deformierbarer Schusskanal erzielt. Zur Erfüllung dieser beiden Anforderungen ist nach der Erfindung die Zweiteiligkeit des Schusskanals vorgesehen. Diese Zweiteiligkeit hat den wesentlichen Vorteil, dass auch die Eckbereiche des Schusskanals entschärft werden. Auch die Eckbereiche können jetzt mit einer Kraft im Lastfall beaufschlagt werden und ausweichen, so dass keine Spannungsspitzen mehr auftreten können.

Ausführungsbeispiele der Erfindung sind in den Zeichnungen dargestellt und werden im Folgenden näher beschrieben.
Es zeigen:

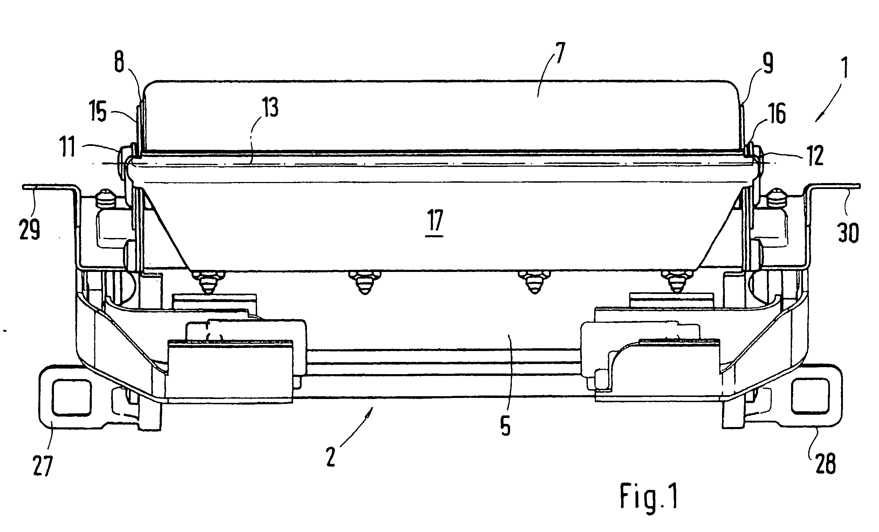

- Fig. 1: eine Vorderansicht auf ein Modul einer Airbageinrichtung,

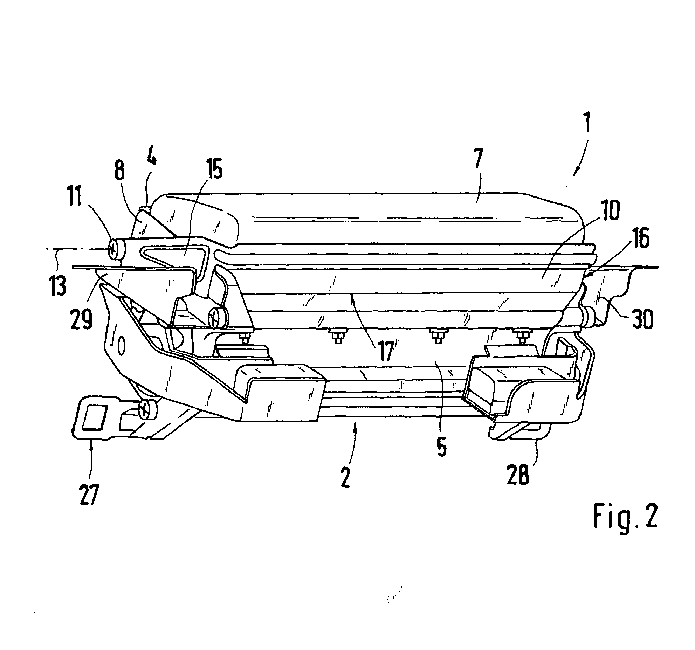

- Fig. 2: eine schaubildliche Darstellung der Airbageinrichtung gemäß Fig. 1,
- Fig. 3: eine Stirnansicht auf die Airbageinrichtung in Einbaustellung,
- Fig. 4: eine schematische Darstellung der Airbageinrichtung mit Generatorgehäuse und Kopfaufschlagelement gemäß Fig. 3,
- Fig. 5: eine Stirnansicht auf die Airbageinrichtung in Ausgangs- und Laststellung,
- Fig. 6: eine schematische Darstellung der Airbageinrichtung mit Generatorgehäuse und Kopfaufschlagelement gemäß Fig. 5,
- Fig. 7: eine weitere Ausführung einer Verbindung mit einer aus Sicken bestehenden Klemmeinrichtung zwischen der Wand des Generatorgehäuses und der Wand des Kopfaufschlagelements,
- Fig. 8: eine weitere Ausführung gem. Fig. 7 mit einer Aufnahme- und Haltesicherung.
- Fig. 9: eine weitere Ausführung des Kopfaufschlagelementes mit Haltesicherung und
- Fig. 10: eine Ansicht auf die Haltesicherung gem. Fig. 9.

Eine Airbageinrichtung 1 umfasst im Wesentlichen ein Generatorgehäuse 2, das in Querrichtung im Fahrzeug unterhalb einer Abdeckung 3 einer Schalttafel 3a bzw. eines Cockpits eines Kraftfahrzeugs angeordnet ist. Dieses Gehäuse 2 weist eine angeformte erste integrierte hintere Wand 4 und eine weitere angeformte zweite vordere Wand 5 - in Bezug auf einen Fahrzeuginsassen bzw. in Bezug auf die Fahrtrichtung F des Fahrzeugszur Bildung eines Schußkanals für einen Luftsack 7 auf, der schematisch dargestellt ist. Dieser Schußkanal wird stirnseitig der Einrichtung 1 durch Konsolen 8, 9 abgeschlossen. Mit dem Generatorgehäuse 2 ist ein sogenanntes Kopfaufschlagelement 10 in Lagern 11, 12 um eine Schwenkachse 13 anlenkbar verbunden.

Das Kopfaufschlagelement 10 besteht aus einem U-förmigen Bügel mit seitlichen Schenkeln 15, 16, die endseitig über die Lager 11, 12 an der hinteren Wand 4 des Generatorgehäuses 2 schwenkbar sind. Diese Schenkel 15, 16 sind über ein Stegteil 17 miteinander verbunden. Dieses bildet zur vorderen Kanalwand 5 des Generatorgehäuses 2 eine obere ergänzende Kanalwand 17a. Diese beiden Wände 5 und 17a sind über eine Verbindung K1; K2; K4 miteinander derart verbunden, daß in Ausgangsstellung I eine feste aber lösbare Verbindung K1, K2; K4 hergestellt wird; dagegen erfolgt bei einer Laststellung II durch Abschwenken des Kopfaufschlagelements 10 in Pfeilrichtung Z ein Verschwenken und somit ein Ausknüpfen bzw. Lösen der Verbindung K1 und K2; K4. Die Verbindung K1 zwischen den vorderen Kanalwänden 5 und 17a erfolgt mittels einer quasi formschlüssigen Verbindung zwischen einer sogenannten Aufnahmerinne 20 in der Wand 5 und einer hierzu korrespondierenden Hakenleiste 21 in der Wand 17a.

Die Aufnahmerinne 20 der Wand 5 weist hierzu im Querschnitt ein bogenförmiges Aufnahmemaul auf, in welche die korrespondierende Hakenleiste 21 der Wand 17a in der Ausgangsstellung I klemmend gehalten wird. Bei einem Lastfall (Laststellung II) bzw. bei einem Kopfaufprall knüpft sich die Hakenleiste 21 aus der Aufnahmerinne 20 aus.

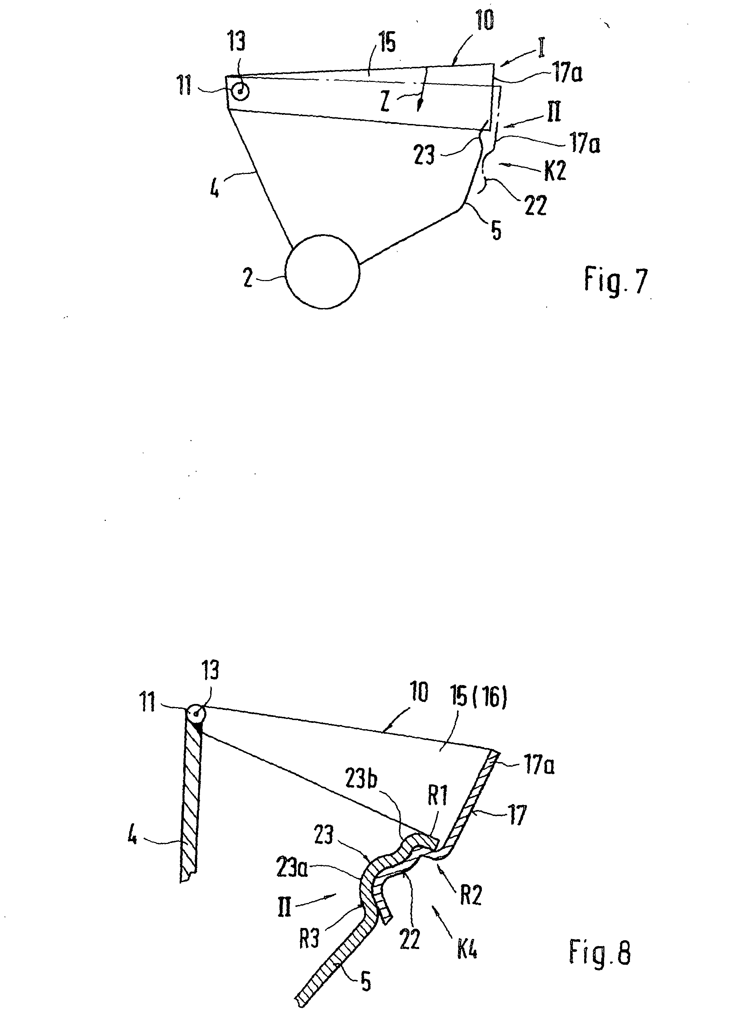

Nach einer weiteren Ausführung gemäß die Fig. 7 und 8 besteht die Verbindung K2; K4 zwischen der Wand 5 des Generatorgehäuses 2 und der Wand 17a des Kopfaufschlagelements 10 aus einem in der Wand ausgeprägten Sicke 22, die in eine eingeprägte Sicke 23 der Wand 5 eingreift. Bei einem Lastfall II, bei dem sich das Kopfaufschlagelement 10 verschwenkt, löst sich die Sicke 22 aus der Sicke 23 und somit kann sich das Kopfaufschlagelement zur Wand 5 hin absenken.

Die Aufnahmesicke in der Wand weist im Querschnitt in etwa eine W-Form mit zwei ausgeprägten Rastsicken auf. Die beiden Ränder R1 und R3 der Aufnahmesicke 23 sind nach außen hin abgestellt. Korrespondierend mit der Aufnahmesicke 23 ist die Haltesicke 22 des Kopfaufschlagelements 10 ebenfalls im Querschnitt W-förmig mit zwei entsprechenden Rastsitzen wie die Aufnahmesicke 23 ausgeführt. Der Rand R1 der Aufnahmesicke 23 bildet einen oberen Anschlag und einen abgestellten Abschnitt R2 an der Haltesicke 22, die sich über diesen Abschnitt R2 am abgestellten Randabschnitt R1 abstützt.

Bei der Ausführung gemäß Fig. 7 wird bei einem Kopfaufprall, das Kopfaufschlagelement 10 in Pfeilrichtung Z um die Schwenkachse 13 nach unten verschwenkt, so daß sich die Wand 17a außenseitig oder innenseitig zur Wand 5 bewegt.

Die Befestigung der Airbageinrichtung 1 am Träger der Aufbaustruktur erfolgt über die stirnseitigen Konsolen 8, 9, die mit dem Generatorgehäuse 2 über Befestigungsmittel verbunden werden. Eine Anbindung der Konsolen 8, 9 an den Trägern bzw. dem Träger erfolgt über abgestellte Winkel 27, 28. Insgesamt soll die Verbindung der Konsolen 8, 9 mit dem Träger unnachgiebig und steif ausgeführt sein. Dagegen soll die Verbindung über die Befestigungsmittel 29, 30 der Einrichtung 1 mit der Schalttafel bzw. dem Cockpit Energie aufnehmen bzw. deformierbar gestaltet werden.

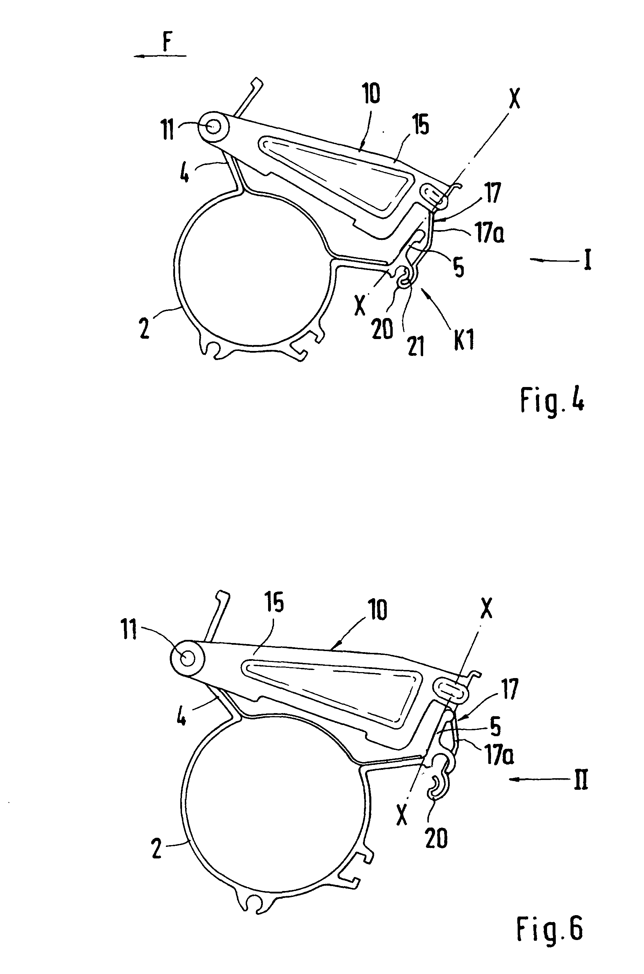

Die vorderen Kanalwände 5 und 17a des Schusskanals für den Luftsack 7 ergänzen sich in der Weise, dass die etwa in Ausgangs- und Laststellung I und II in etwa in einer gemeinsamen Ebene X-X angeordnet sind, so dass der Luftsack 7 in seiner Bewegung nicht gehindert wird. In der Laststellung II gem. Fig. 6 kann sich die obere Kanalwand 17a an der unteren Kanalwand 5 in einem Bereich abstützen.

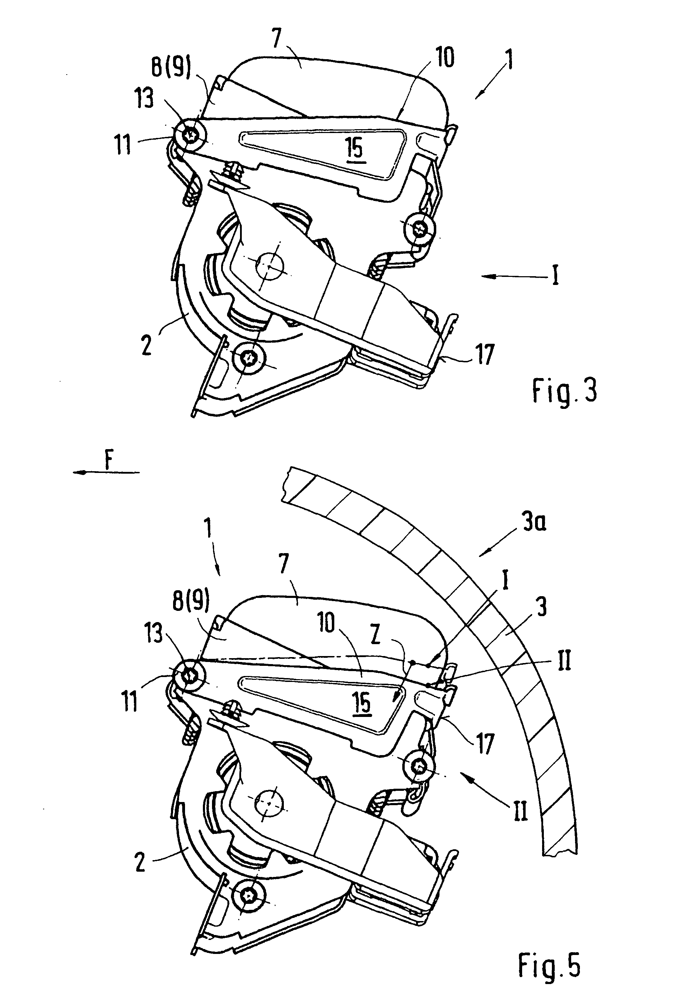

Wie in den Fig. 3 und 5 näher dargestellt ist, ergänzen sich die Konsolen 8 und 9 mit den Schenkeln 14 und 15 des Kopfaufschlagelements 10 zur Bildung eines an den Ecken hochgezogenen Schusskanals.

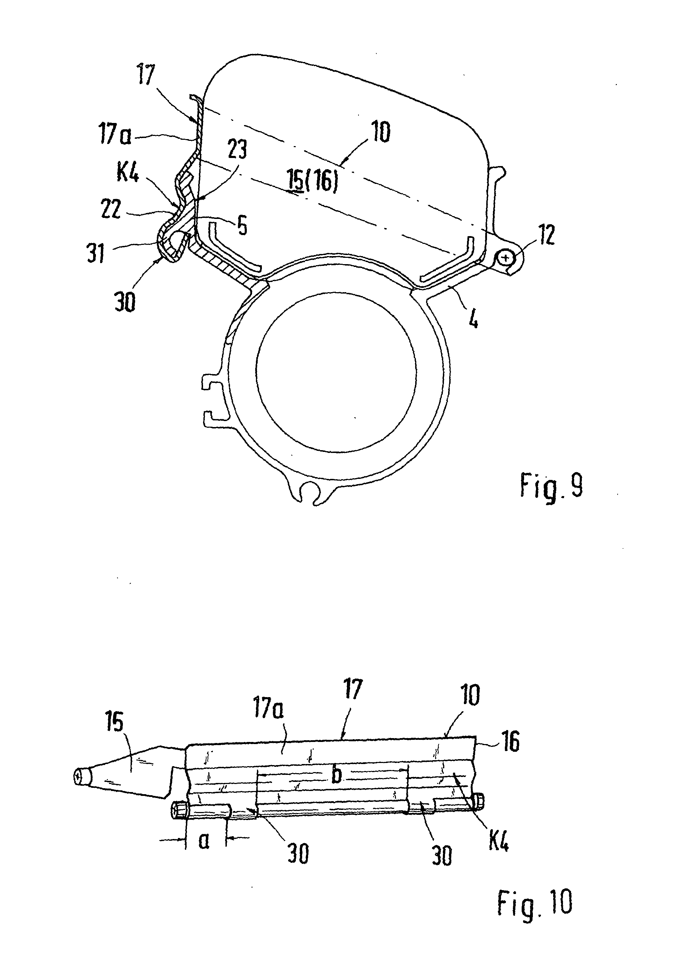

Gemäß der Ausführung Fig. 9 weist der Steg 17 zwischen den beiden Schenkeln 15, 16 des Kopfaufschlagelements 10 mindestes zwei Montageeinhängösen 30 auf, die beabstandet mit einem Abstand b zueinander angeordnet sind. Zwischen diesen Ösen 30 und oberhalb dieser Ösen 30 ist die eigentlich Verbindung K4 des Stegteils 17 mit der Kanalwand 5 vorgesehen. Diese Verbindung K4 besteht, wie auch in Fig. 8 näher dargestellt ist, aus der Aufnahmesicke 23 und der Haltesicke 22. Die Einhängösen 30 sind, wie in Fig. 10 näher dargestellt, mit einem Abstand a vom Ende des Kopfaufschlagelements 10 angeordnet, wobei zwischen den beiden Einhängösen 30 ein Abstand b vorgesehen ist. Diese Ösen 30 sind alleinig zum Festhalten am Kopfaufschlagteil 10 vorgesehen, wogegen die Verbindung K4 die eigentliche Reibungsarbeit beim Kopfaufschlag bewirkt.

## Patentansprüche

1. Airbageinrichtung für ein Kraftfahrzeug, die in einem Armaturenbrett unterhalb einer Abdeckung (3) angeordnet ist und ein in Querrichtung des Fahrzeugs ausgerichtetes Generatorgehäuse (2) umfaßt, das zwischen integrierten Wänden (4, 5) und hieran anschließenden separaten stirnseitigen Wänden einen Schusskanal für einen Luftsack (7) bildet und zumindest eine integrierte Wand des Schusskanals in Laststellung (II) verlagerbar ist und in einer ersten integrierten Kanalwand (4) des Generatorgehäuses (2) ein Kopfaufschlagelement (10) in Lagern (11, 12) einseitig schwenkbeweglich angeordnet ist und in der zweiten integrierten Kanalwand (5) des Gehäuses (2) das Kopfaufschlagelement (10) in einer Ausgangsstellung (I) über eine Verbindung (K1; K2; K4) einhängbar und in einer Laststellung (II) ausknüpfbar ist und das Kopfaufschlagelement (10) aus einem U-förmigen Bügel mit an der ersten Kanalwand (4) des Gehäuses (2) gelagerten Schenkeln (15, 16) besteht, die über ein Stegteil (17) miteinander verbunden sind, das eine ergänzende obere Kanalwand (17a) bildet, **dadurch gekennzeichnet, dass** das die vordere Kanalwand (5) des Kopfaufschlagelements (10) bildende Stegteil (17) zwischen den beiden Schenkeln (15, 16) als Verbindung (K2; K4) eine längsverlaufende ausgeprägte Haltesicke (22) aufweist, die in der Laststellung (II) klemmend in einer korrespondierenden längsverlaufenden eingeprägten Aufnahmesicke (23) angeordnet ist und die Haltesicke (22) in Laststellung (II) herausgeschwenkt aus dieser Aufnahmesicke (23) angeordnet ist, wobei das Stegteil (17) zwischen den beiden Schenkeln (15, 16) des Kopfaufschlagelements (10) randseitig mindestens zwei beabstandete Montageeinhängösen (30) aufweist, die eine Randkante (31) der Wand (17a) umgreifen und zwischen den Einhängösen (30) die der Aufnahmesicke (23) zugerichtete Haltesicke (22) der Verbindung (K4) angeordnet ist und diese Sicken (22, 33) formschlüssig miteinander verbunden sind.

2. Einrichtung nach Anspruch 1, **dadurch gekennzeichnet, dass** die obere Kanalwand (17a) des Kopfaufschlagelements (10) um eine von den Lagern (11,12) gebildete etwa horizontale Schwenkachse (13) gegenüber der ortsfesten zweiten Kanalwand (5) des Generatorgehäuses (2) im Lastfall (II) nach unten unter Ausknüpfung der formschlüssigen Verbindung (K1; K2; K4) abschwenkbar ist.

3. Einrichtung nach den Ansprüchen 1 oder 2, **dadurch gekennzeichnet, daß** die Aufnahmesicke (23) in der Wand (5) im Querschnitt etwa W-förmig mit zwei Rastsicken (23a und 23b) ausgeführt ist und ein oberer Rand (R1) der Wand (5) nach außen abgewinkelt ist, wobei korrespondierend zu der Aufnahmesicke (23) die Haltesicke (22) der Kanalwand (17a) in der Aufnahmesicke (23) anliegend festgehalten angeordnet ist.

4. Einrichtung nach Anspruch 3, **dadurch gekennzeichnet, daß** der Rand (R1) der Aufnahmesicke (23) einen oberen Anschlag bildet und ein abgestellter Abschnitt (R2) der Haltesicke (22) an diesem Rand (R1) abgestützt ist.

5. Einrichtung nach Anspruch 1, **dadurch gekennzeichnet, dass** die Klemmverbindung (K1) eine Aufnahmerinne (20) für eine angeformte Hakenleiste (21) an der zweiten Kanalwand (5) des Gehäuses (2) aufweist und diese Aufnahmerinne (20) eine bogenförmige Ausbildung besitzt, in welche die korrespondierende und im Querschnitt entsprechend ausgebildete bogenförmige Hakenleiste (21) formschlüssig eingeklemmt ist.

6. Einrichtung nach Anspruch 1, **dadurch gekennzeichnet, dass** das Generatorgehäuse (2) an stirnseitigen Konsolen (8, 9) über Befestigungsmittel gehalten ist und diese über abgestellte Winkel (27, 28) mit einem Träger des Fahrzeugaufbaus steif verbunden sind.

7. Einrichtung nach Anspruch 1, **dadurch gekennzeichnet, dass** mit dem Generatorgehäuse (2) Befestigungswinkel (29, 30) verbunden sind, über welche die Airbageinrichtung (1) an einer Schalttafel des Fahrzeugs deformierbar befestigbar ist.

8. Einrichtung nach den Ansprüchen 2 bis 7, **dadurch gekennzeichnet, dass** die zweite Kanalwand (5) des Generatorgehäuses (2) in der Ausgangsstellung (I) etwa in einer gemeinsamen Ebene (X-X) mit einem oberen anschließenden Teilbereich der Kanalwand (17a) des Kopfaufschlagelements (10) liegt.

9. Einrichtung nach einem oder mehreren der vorhergehenden Ansprüche, **dadurch gekennzeichnet, dass** an der zweiten Kanalwand (5) des Generatorgehäuses (2) bei Laststellung (II) die obere Kanalwand (17a) des Kopfanschlagelements (10) abgestützt ist.

10. Einrichtung nach einem oder mehreren der vorhergehenden Ansprüche, **dadurch gekennzeichnet, dass** die Schenkel (15, 16) des Kopfaufschlagelements (10) die stirnseitigen Konsolen (8, 9) von außen übergreifen und die Schenkel (15, 16) und die Konsolen (8, 9) sich ergänzende gemeinsame stirnseitige Kanalwände (5, 17a) bilden.

11. Einrichtung nach einem oder mehreren der vorhergehenden Ansprüche, **dadurch gekennzeichnet, dass** die Wandungen (4 und 5) des Schusskanals aus einem Aluminium Strangpressprofil bestehen

## Claims

1. An air bag device for a motor vehicle, said air bag device being arranged in a dashboard underneath a cover (3) and comprising a generator housing (2) which is orientated in the transverse direction of the vehicle and which forms a firing channel for an air bag (7) between integrated walls (4, 5) and adjoining, separate, end walls, and at least one integrated wall of the firing channel is displaceable in the load position (II), and a head-impact member (10) is pivotably arranged on one side in bearings (11, 12) in a first integrated channel wall (4) of the generator housing (2) and, in the second integrated channel wall (5) of the housing (2), the head-impact member (10) is engageable in a starting position (I) by means of a connection (K1; K2; K4) and is releasable in a load position (II), and the head-impact member (10) comprises a U-shaped frame with arms (15, 16) which are mounted on the first channel wall (4) of the housing (2) and are connected to one another by a web part (17) which forms a supplementary upper channel wall (17a), **characterised in that** the web part (17), which forms the front channel wall (5) of the head-impact member (10) and extends between the two arms (15, 16), has a longitudinally extending, protruding holding bead (22) which forms a connection (K2; K4) and which, in the load position (II), is clamped in a corresponding, longitudinally extending, indented receiving bead (23), and the holding bead (22) is pivoted out of this receiving bead (23) in the load position (II), wherein the web part (17) between the two arms (15, 16) of the head-impact member (10) is provided on its edge with at least two spaced mounting suspension eyes (30) which engage round an outer edge (31) of the wall (17a), and the holding bead (22), which faces the receiving bead (23) and forms the connection (K4), is arranged between the suspension eyes (30), and these beads (22, 23) are positively connected to one another.

2. A device according to claim 1, **characterised in that**, in the event of load (II), the upper channel wall (17a) of the head-impact member (10) is pivotable downwards in relation to the fixed second channel wall (5) of the generator housing (2) about a substantially horizontal pivoting axis (13) formed by the bearings (11, 12), thereby releasing the positive connection (K1; K2; K4).

3. A device according to claim 1 or 2, **characterised in that** the receiving bead (23) in the wall (5) is substantially W-shaped in cross-section and has two locking beads (23a and 23b), and an upper edge (R1) of the wall (5) is bent outwards, wherein, in a manner complementary to the receiving bead (23), the holding bead (22) of the channel wall (17a) lies in the receiving bead (23) and is secured therein.

4. A device according to claim 3, **characterised in that** the edge (R1) of the receiving bead (23) forms an upper stop, and a shouldered portion (R2) of the holding bead (22) is supported on this edge (R1).

5. A device according to claim 1, **characterised in that** the clamped connection (K1) comprises a receiving groove (20) for a hooked strip (21) formed on the second channel wall (5) of the housing (2), and this receiving groove (20) has a curved formation, in which the complementary, curved hooked strip (21) of corresponding cross-section is positively clamped.

6. A device according to claim 1, **characterised in that** the generator housing (2) is held on end brackets (8, 9) by fastening means, and these end brackets (8, 9) are rigidly connected to a support of the vehicle body by remotely arranged angles (27, 28).

7. A device according to claim 1, **characterised in that** fastening angles (29, 30) are connected to the generator housing (2), by means of which fastening angles (29, 30) the air bag device (1) is deformably fixable to an instrument panel of the vehicle.

8. A device according to claims 2 to 7, **characterised in that** the second channel wall (5) of the generator housing (2) in the starting position (I) lies substantially in a common plane (X-X) with an upper, adjacent sub-region of the channel wall (17a) of the head-impact member (10).

9. A device according to one or more of the preceding claims, **characterised in that** the upper channel wall (17a) of the head-impact member (10) is supported on the second channel wall (5) of the generator housing (2) in the load position (II).

10. A device according to one or more of the preceding claims, **characterised in that** the arms (15, 16) of the head-impact member (10) engage over the end brackets (8, 9) from outside, and the arms (15, 16) and the brackets (8, 9) form complementary, common, channel end walls (5, 17a).

11. A device according to one or more of the preceding claims, **characterised in that** the walls (4, 5) of the firing channel comprise an aluminium extruded section.

## Revendications

1. Dispositif à sac gonflable pour un véhicule automobile, qui est disposé dans un tableau de bord, au-dessous d'un couvercle (3) et comprend un boîtier de générateur (2) orienté dans la direction transversale du véhicule, lequel boîtier forme, entre des parois (4, 5) intégrées et des parois frontales séparées, attenantes aux premières, un canal de déploiement d'un sac gonflable (7) et au moins une paroi intégrée du canal de déploiement est déplaçable dans la position de charge (2) et, dans une première paroi de canal (4) intégrée du boîtier de générateur (2), un élément de choc de la tête (10) est disposé dans des paliers (11, 12) de manière à pivoter d'un côté, et dans la deuxième paroi de canal (5) intégrée du boîtier (2), l'élément de choc de la tête (10) peut s'accrocher dans une position initiale (I), par une liaison (K1 ; K2 ; K4), et se décrocher dans une position de charge (II), et l'élément de choc de la tête (10) est constitué d'un étrier en U avec des branches (15, 16) montées sur la première paroi de canal (4) du boîtier (2), lesquelles branches sont reliées entre elles par un dos (17) qui forme une paroi de canal supérieure (17a) complémentaire, **caractérisé en ce que** le dos (17) formant la paroi de canal avant (5) de l'élément de choc de la tête (10) présente, entre les deux branches (15, 16), comme liaison (K2 ; K4), une moulure de retenue (22) marquée s'étendant longitudinalement qui, dans la position de charge (II), est disposée avec serrage dans une moulure de réception (23) marquée correspondante s'étendant longitudinalement, et dans la position de charge (II), la moulure de retenue (22) est pivotée à l'extérieur de cette moulure de réception (23), le dos (17) comportant, entre les deux branches (15, 16) de l'élément de choc de la tête (10), côté bord, au moins deux oeillets d'accrochage de montage (30) espacés qui entourent une arête de bordure (31) de la paroi (17a) et, entre les oeillets d'accrochage (30), est disposée la moulure de retenue (22), tournée vers la moulure de réception (23), de la liaison (K4), et ces moulures (22, 23) sont reliées entre elles par complémentarité de formes.

2. Dispositif selon la revendication 1, **caractérisé en ce que** la paroi de canal supérieure (17a) de l'élément de choc de la tête (10) peut pivoter vers le bas autour d'un axe de pivotement (13) à peu près horizontal, formé par les paliers (11, 12), par rapport à la deuxième paroi de canal (5) fixe du boîtier de générateur (2), en cas de charge (II), avec décrochage de la liaison (K1 ; K2 ; K4) par complémentarité de formes.

3. Dispositif selon les revendications 1 ou 2, **caractérisé en ce que** la moulure de réception (23) pratiquée dans la paroi (5) présente une section à peu près en W avec deux moulures d'encliquetage (23a et 23b), et un bord supérieur (R1) de la paroi (5) est coudé vers l'extérieur, en correspondance avec la moulure de réception (23), la moulure de retenue (22) de la paroi de canal (17a) étant fermement maintenue avec contact dans la moulure de réception (23).

4. Dispositif selon la revendication 3, **caractérisé en ce que** le bord (R1) de la moulure de réception (23) forme une butée supérieure, et un décrochement (R2) de la moulure de retenue (22) est soutenu contre ce bord (R1).

5. Dispositif selon la revendication 1, **caractérisé en ce que** la liaison par serrage (K1) comporte une rigole de réception (20) pour une baguette à crochet (21) formée rapportée, sur la deuxième paroi de canal (5) du boîtier (2), et cette rigole de réception (20) présente un creux arqué dans lequel la baguette à crochet (21) correspondante et dont la section est réalisée de manière arquée, est serrée par complémentarité de formes.

6. Dispositif selon la revendication 1, **caractérisé en ce que** le boîtier de générateur (2) est maintenu sur des consoles (8, 9) frontales par des moyens de fixation et celles-ci sont reliées rigidement à une poutre de la carrosserie du véhicule, par des équerres (27, 28) en retrait.

7. Dispositif selon la revendication 1, **caractérisé en ce qu'**au boîtier de générateur (2) sont reliées des équerres de fixation (29, 30) par lesquelles le dispositif à sac gonflable (1) peut être fixé, de façon déformable, à un tableau de bord du véhicule.

8. Dispositif selon les revendications 2 à 7, **caractérisé en ce que** la deuxième paroi de canal (5) du boîtier de générateur (2) se situe, dans la position initiale (1), approximativement dans un plan (X-X) commun avec une zone partielle supérieure attenante de la paroi de canal (17a) de l'élément de choc de la tête (10).

9. Dispositif selon une ou plusieurs des revendications précédentes, **caractérisé en ce que** sur la deuxième paroi de canal (5) du boîtier de générateur (2), en position de charge (II), s'appuie la paroi de canal supérieure (17a) de l'élément de choc de la tête (10).

10. Dispositif selon une ou plusieurs des revendications précédentes, **caractérisé en ce que** les branches (15, 16) de l'élément de choc de la tête (10) passent de l'extérieur sur les consoles (8, 9) frontales, et les branches (15, 16) ainsi que les colonnes (8, 9) forment des parois de canal (5, 17a) frontales communes se complétant.

11. Dispositif selon une ou plusieurs des revendications précédentes, **caractérisé en ce que** les parois (4 et 5) du canal de déploiement sont constituées d'un profilé extrudé en aluminium.
